# EUROPEAN PATENT APPLICATION

(11) **EP 4 194 138 A1**
(43) Date of publication of application: **14.06.2023**
(21) Application number: 21851958.5
(22) Date of filing: 26.05.2021
(51) Int. Cl.: B23K 26/064, B23K 26/046

(54) **LASER PROCESSING HEAD AND LASER PROCESSING DEVICE**

(30) Priority: 06.08.2020 JP 2020133971
(71) Applicant: Panasonic Intellectual Property Management Co., Ltd., Osaka-shi, Osaka 540-6207 (JP)
(72) Inventor: MATSUMOTO, Akihisa, Chuo-ku, Osaka-shi, Osaka 540-6207 (JP); OTA, Takahiro, Chuo-ku, Osaka-shi, Osaka 540-6207 (JP); NAGATOSHI, Keita, Chuo-ku, Osaka-shi, Osaka 540-6207 (JP)
(74) Representative: Murgitroyd & Company
(86) International application number: PCT/JP2021/019914
(87) International publication number: WO 2022/030076

(57) **Abstract**

A laser processing head (12) is provided with: an optical component (22) for splitting a laser light (Lx) into a laser light (Lx1) and a laser light (Lx2); a scanning unit (24) for scanning the laser light (Lx1); a light reception unit (25) for detecting the intensity of the laser light (Lx2); a second shutter (32) that shifts between a closed position in which the laser light (Lx1) is blocked and an open position in which the laser light (Lx1) is transmitted; and a focal distance adjustment unit (23) for adjusting the focal distance of the laser light (Lx1). The second shutter (32) is arranged between the optical component (22) and the focal distance adjustment unit (23).

## Description

### TECHNICAL FIELD

The present invention relates to a laser processing head and a laser processing device.

### BACKGROUND ART

Patent literature 1 discloses a laser processing device including a laser light source that emits laser light, which is invisible light, a visible light source that emits guide light, which is visible light, a mixing mirror that splits the laser light into first split light and second split light and aligns the optical axis of the guide light with the optical axis of the first split light, a galvano mirror that changes the direction of the first split light and the guide light, a light receiving element that detects the intensity of the second split light, a first shutter disposed between the laser light source and the mixing mirror, and a second shutter disposed between the mixing mirror and the galvano mirror.

The laser processing device opens and closes the first shutter and the second shutter in accordance with a state in which a workpiece is irradiated with only the first split light for processing, a state in which the workpiece is irradiated with only the guide light for checking, and a state in which the light receiving element is irradiated with the second split light for measuring.

### CITATION LIST

### Patent Literature

Patent Literature 1: Japanese Laid-Open Patent Publication No. 2007-61843

### SUMMARY OF INVENTION

### Technical Problem

It is preferred that a laser processing device such as that described above has a function to adjust the focal length of laser light so that the irradiation position on a workpiece with the laser light is changed in accordance with the shape of the surface of the workpiece and the height of the workpiece. It is an objective of the present invention to provide a laser processing head and a laser processing device that adjust the focal length of laser light while limiting enlargement of the laser processing head and the laser processing device.

### Solution to Problem

Means and operational advantages for achieving the above objective will be described below.

To achieve the above objective, a laser processing head is configured to process a workpiece using processing laser light that is invisible. The laser processing head includes an optical component that splits the processing laser light, which is emitted from a processing laser light source, into first split light and second split light and aligns an optical axis of viewing laser light with an optical axis of the first split light, the viewing laser light being visible and being emitted from a viewing laser light source, a scanner that scans the first split light and the viewing laser light to the workpiece, a light receiving portion that detects an intensity of the second split light, a first shutter disposed closer to the processing laser light source than the optical component to shift between a closed position at which the first shutter blocks the processing laser light and an open position at which the first shutter allows transmission of the processing laser light, a second shutter disposed closer to the workpiece than the optical component to shift between a closed position at which the second shutter blocks the first split light and the viewing laser light and an open position at which the second shutter allows transmission of the first split light and the viewing laser light, and a focal length adjuster that adjusts a focal length of the first split light and the viewing laser light. The second shutter is disposed between the optical component and the focal length adjuster.

In a comparative example in which a shutter is disposed forward of a focal length adjuster in the traveling direction of a first split light, the focal length adjuster needs to adjust the focal length taking into consideration the region occupied by the shutter in the direction in which the optical axis of the first split light extends. In this case, the focal length adjuster 23X is likely to increase in size. In this regard, in the laser processing device described above, the second shutter is disposed between the optical component and the focal length adjuster. Thus, the above situation is not likely to occur. This limits enlargement of the laser processing device.

To achieve the above objective, a laser processing device is configured to process a workpiece using processing laser light that is invisible. The laser processing device includes a processing laser light source that emits the processing laser light, a viewing laser light source that emits viewing laser light that is visible, an optical component that splits the processing laser light into first split light and second split light and aligns an optical axis of the viewing laser light with an optical axis of the first split light, a scanner that scans the first split light and the viewing laser light to the workpiece, a light receiving portion that detects an intensity of the second split light, a first shutter disposed closer to the processing laser light source than the optical component to shift between a closed position at which the first shutter blocks the processing laser light and an open position at which the first shutter allows transmission of the processing laser light, a second shutter disposed closer to the workpiece than the optical component to shift between a closed position at which the second shutter blocks the first split light and the viewing laser light and an open position at which the second shutter allows transmission of the first split light and the viewing laser light, and a focal length adjuster that adjusts a focal length of the first split light and a focal length of the viewing laser light. The second shutter is disposed between the optical component and the focal length adjuster.

The laser processing device having the structure described above obtains the same operational advantages as the laser processing head described above.

### Advantageous Effects of Invention

The laser processing head and the laser processing device adjust the focal length of laser light while limiting enlargement of the laser processing head and the laser processing device.

### BRIEF DESCRIPTION OF DRAWINGS

Fig. 1 is a schematic diagram showing an embodiment of a laser processing device.
Fig. 2 is a schematic diagram showing a focal length adjuster of the laser processing device.
Fig. 3 is a flowchart of a process executed by a controller of the laser processing device in a processing mode, a viewing mode, and a measuring mode.
Fig. 4 is a flowchart of a process executed by the controller of the laser processing device at any timing.
Fig. 5 is a schematic diagram of the focal length adjuster of the above-described laser processing device and a comparative example of a focal length adjuster of a laser processing device for comparison.

### DESCRIPTION OF EMBODIMENTS

Embodiments of a laser processing device and a laser processing head will be described below. The laser processing device of the present embodiment is a laser marking device and emits a laser beam to a surface of a workpiece to form characters, symbols, figures, and the like on the surface of the workpiece.

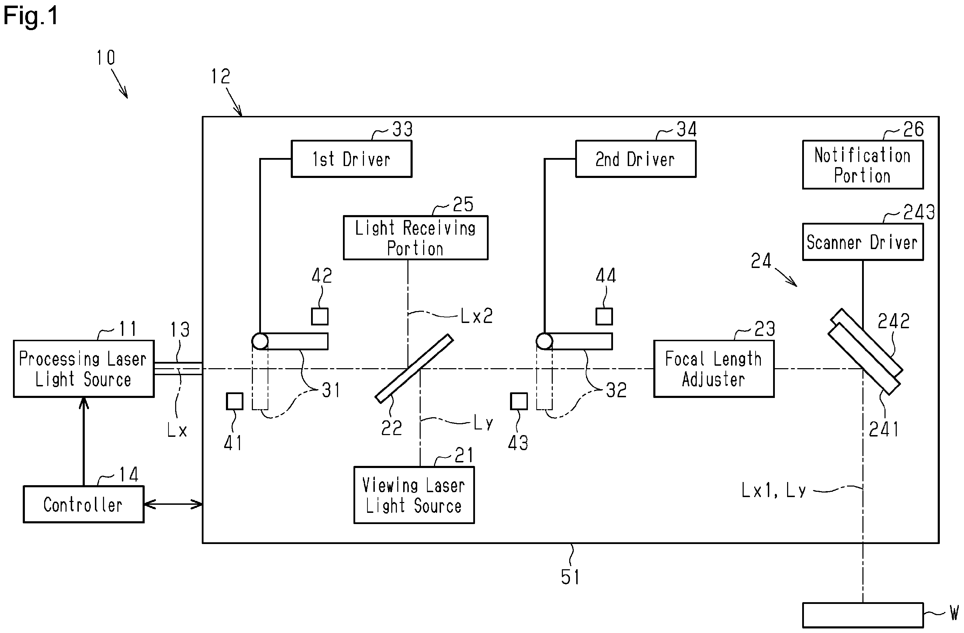

As shown in Fig. 1, a laser processing device 10 includes a processing laser light source 11, a laser processing head 12, an optical fiber cable 13, and a controller 14.

In the laser processing device 10 of the present embodiment, the processing laser light source 11, the laser processing head 12, and the controller 14 are formed separately from each other. In another embodiment, the processing laser light source 11, the laser processing head 12, and the controller 14 may be formed integrally.

The processing laser light source 11 emits laser light Lx, which is invisible light, that processes a workpiece W. The processing laser light source 11 is a laser light source of, for example, a YAG laser, a carbon-dioxide laser, or a fiber laser. The laser light Lx emitted from the processing laser light source 11 corresponds to the "processing laser light".

The laser processing head 12 emits the laser light Lx, which is emitted from the processing laser light source 11, toward the workpiece W. The laser processing head 12 is connected to the processing laser light source 11 by the optical fiber cable 13.

The laser processing head 12 includes a viewing laser light source 21, an optical component 22, a focal length adjuster 23, a scanner 24, a light receiving portion 25, a notification portion 26, a first shutter 31, a second shutter 32, a first driver 33, and a second driver 34. The laser processing head 12 includes a first closing sensor 41, a first opening sensor 42, a second closing sensor 43, a second opening sensor 44, and a casing 51.

The viewing laser light source 21 emits laser light Ly for viewing. The viewing laser light source 21 is, for example, a laser diode or a light emitting diode (LED). The laser light Ly is visible light and has a wavelength in the visible range. The laser light Ly emitted from the viewing laser light source 21 corresponds to the "viewing laser light".

The optical component 22 is used as a beam splitter that splits incident laser light Lx into laser light Lx1 and laser light Lx2 at a predetermined split ratio and as a mirror that reflects incident laser light Ly. In this regard, the optical component 22 may include two components, namely, a first optical component as the beam splitter and a second optical component as the mirror. Preferably, the optical component 22 has a transmittance of 90% or greater to the laser light Lx and a reflectance of 90% or greater to the laser light Ly. The laser light Lx1 corresponds to the "first split light". The laser light Lx2 corresponds to the "second split light".

The optical component 22 is disposed in a position where the laser light Lx, which is emitted from the processing laser light source 11, intersects the laser light Ly, which is emitted from the viewing laser light source 21. The optical component 22 includes an optical coating that is inclined 45 degrees from the optical axis of the laser light Lx, which is emitted from the processing laser light source 11, and 45 degrees from the optical axis of the laser light Ly, which is emitted from the viewing laser light source 21. The optical component 22 includes a surface that receives the laser light Lx from the processing laser light source 11 and a surface that receives the laser light Ly from the viewing laser light source 21. The surfaces are located at opposite sides of the optical component 22. Thus, in the present embodiment, because of the optical component 22, the optical axis of the laser light Lx1 substantially coincides with the optical axis of the laser light Ly, and the optical axis of the laser light Lx1 is substantially orthogonal to the optical axis of the laser light Lx2.

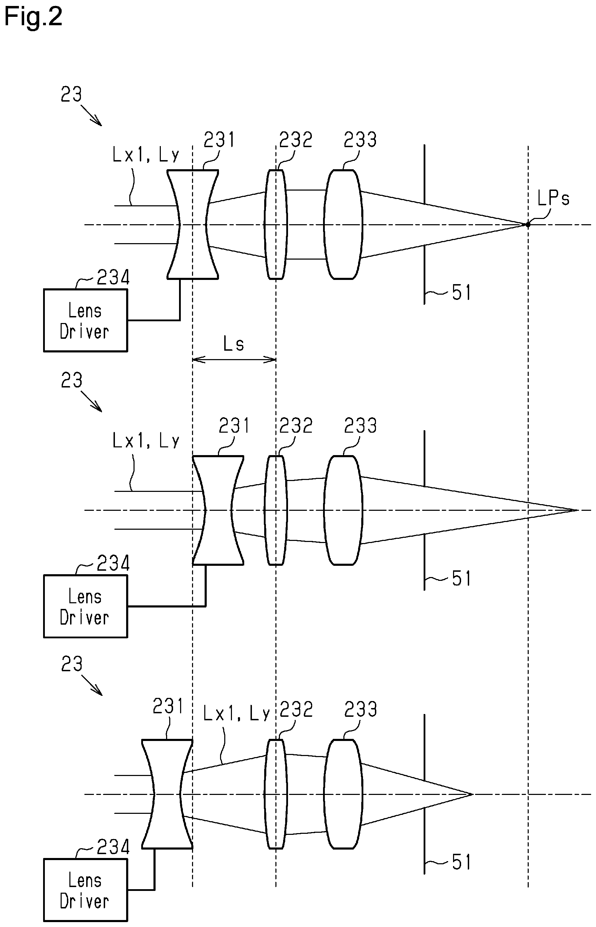

An example of the structure of the focal length adjuster 23 will now be described with reference to Figs. 1 and 2. To facilitate understanding, Fig. 2 does not show some components of the laser processing device 10 such as the scanner 24.

As shown in Fig. 1, the focal length adjuster 23 is disposed between the optical component 22 and the scanner 24 in a direction in which the optical axis of the laser light Lx1, Ly extends. As shown in Fig. 2, the focal length adjuster 23 includes a first lens 231, a second lens 232, a third lens 233, and a lens driver 234.

The first lens 231 is a concave lens. The second lens 232 and the third lens 233 are each a convex lens. The second lens 232 and the third lens 233 are disposed on the optical axis of the first lens 231. In an example, the lens driver 234 includes a motor and a transmission mechanism that converts rotational movement of the output shaft of the motor into reciprocal movement of the first lens 231. The lens driver 234 moves the first lens 231 along the optical axis of the laser light Lx1, Ly to change the distance between the first lens 231 and the second lens 232.

When the distance between the first lens 231 and the second lens 232 is equal to a reference distance Ls, the second lens 232 outputs the laser light Lx1, Ly, the beam radius of which is increased by the first lens 231, as parallel beams of light. In this case, the third lens 233 causes the laser light Lx1, Ly to converge on a reference focal point LPs.

When the distance between the first lens 231 and the second lens 232 is less than the reference distance Ls, the second lens 232 further increases the beam radius of the laser light Lx1, Ly from the beam radius increased by the first lens 231. In this case, the third lens 233 causes the laser light Lx1, Ly to converge on a position farther than the reference focal point LPs.

When the distance between the first lens 231 and the second lens 232 is greater than the reference distance Ls, the second lens 232 causes the beam radius of the laser light Lx1, Ly to converge from the beam radius increased by the first lens 231. In this case, the third lens 233 causes the laser light Lx1, Ly to converge on a position closer than the reference focal point LPs.

As described above, the focal length adjuster 23 decreases the distance between the first lens 231 and the second lens 232 to extend the focal length. Also, the focal length adjuster 23 increases the distance between the first lens 231 and the second lens 232 to shorten the focal length. Thus, the laser processing device 10 adjusts the focal point of the laser light Lx1 to accurately perform laser processing on a workpiece W having a processing surface that changes in a height-wise direction. In this regard, when the workpiece W is irradiated with the laser light Ly, the focal length adjuster 23 does not need to adjust the focal length as precisely as when the workpiece W is irradiated with the laser light Lx1.

As shown in Fig. 1, the scanner 24 includes two galvano mirrors 241 and 242 and a scanner driver 243 that drives the galvano mirrors 241 and 242. The galvano mirrors 241 and 242 are each, for example, a total reflection mirror. The galvano mirrors 241 and 242 are each supported and rotatable in a predetermined direction. One of the galvano mirrors 241 is supported to be rotatable relative to the workpiece W in a first direction. The other one of the galvano mirrors 242 is supported to be rotatable relative to the workpiece W in a second direction that is orthogonal to the first direction. The scanner 24 uses the scanner driver 243 to rotate the galvano mirrors 241 and 242 to perform two-dimensional scanning of the laser light Lx1, Ly on the workpiece W in predetermined two directions. The workpiece W is irradiated with the laser light Lx1, Ly, which is reflected by the galvano mirrors 241 and 242 of the scanner 24.

The light receiving portion 25 receives the laser light Lx2, which is part of the laser light Lx emitted from the processing laser light source 11 and reflected by the optical component 22. The light receiving portion 25 transmits a signal corresponding to the intensity of the received laser light Lx2 to the controller 14. In other words, the light receiving portion 25 is a light receiving element that detects the intensity of the laser light Lx2. The intensity of the laser light Lx2 increases as the intensity of the laser light Lx increases. Thus, the intensity of the laser light Lx2 correlates with the intensity of the laser light Lx.

The notification portion 26 notifies the user of various types of information including a warning based on a control signal output from the controller 14. The notification portion 26 may include, for example, a display configured to show at least one of a character and an image, a lamp that is illuminated and unilluminated, or a speaker that outputs sound. The notification portion 26 and the laser processing head 12 may be disposed on different locations.

The first shutter 31 and the second shutter 32 are formed from a material that is non-transmissive to the laser light Lx, Ly. The first shutter 31 and the second shutter 32 have the same specifications and are identical in shape, size, and so on. The first shutter 31 is located closer to the processing laser light source 11 than the optical component 22 in a traveling direction of the laser light Lx. In an example, the first shutter 31 is disposed between the processing laser light source 11 and the optical component 22 in a transmission path extending from the processing laser light source 11 of the laser light Lx, Lx1 to the workpiece W. The first shutter 31 is actuated by the first driver 33 between a closed position at which the first shutter 31 blocks the laser light Lx and an open position at which the first shutter 31 allows transmission of the laser light Lx. In the same manner, the second shutter 32 is located closer to the workpiece W than the optical component 22, more specifically, between the optical component 22 and the focal length adjuster 23, in the traveling direction of the laser light Lx1. In an example, the second shutter 32 is disposed between the optical component 22 and the workpiece W, more specifically, between the optical component 22 and the focal length adjuster 23, in the transmission path extending from the processing laser light source 11 of the laser light Lx, x1 to the workpiece W. The second shutter 32 is actuated by the second driver 34 between a closed position at which the second shutter 32 blocks the laser light Lx1, Ly and an open position at which the second shutter 32 allows transmission of the laser light Lx1, Ly.

The first shutter 31 and the second shutter 32 may be configured to rotate between the closed position and the open position or may be configured to linearly move between the closed position and the open position. In Fig. 1, the double-dashed lines indicate the first shutter 31 and the second shutter 32 that are located in the closed position, and the solid lines indicate the first shutter 31 and the second shutter 32 that are located in the open position. In the description hereafter, the "shutter" may refer to both the first shutter 31 and the second shutter 32.

The first driver 33 includes, for example, a motor and a conversion mechanism that converts rotational movement of the output shaft of the motor into opening-closing movement of the first shutter 31. The first driver 33 may include, for example, an actuator such as a solenoid. The second driver 34 and the first driver 33 have the same specifications. The second driver 34 is the same as the first driver 33 except that the driving subject is the second shutter 32.

The first closing sensor 41 detects that the first shutter 31 is located in the closed position. The first opening sensor 42 detects that the first shutter 31 is located in the open position. The second closing sensor 43 detects that the second shutter 32 is located in the closed position. The second opening sensor 44 detects that the second shutter 32 is located in the open position. More specifically, the first closing sensor 41, the first opening sensor 42, the second closing sensor 43, and the second opening sensor 44 transmit activation and deactivation signals to the controller 14 in accordance with the position of the first shutter 31 and the second shutter 32. In this regard, the first closing sensor 41 and the first opening sensor 42 correspond to an example of the "first opening-closing sensor" that detects the open-closed state of the first shutter 31. The second closing sensor 43 and the second opening sensor 44 correspond to an example of the "second opening-closing sensor" that detects the open-closed state of the second shutter 32.

The sensors may be a photoelectric sensor that changes the transmissive aspect of light or the reflective aspect of light in accordance with the position of the shutter. The sensors may be a limit switch that switches outputting signals in accordance with physical contact with the shutter. The sensors may be a magnetic sensor that magnetically detects the position of the shutter.

The first closing sensor 41 outputs the "first closed signal Sc1" that is activated when the first shutter 31 is located in the closed position and deactivated when the first shutter 31 is not located in the closed position. The first opening sensor 42 outputs the "first open signal So1" that is activated when the first shutter 31 is located in the open position and deactivated when the first shutter 31 is not located in the open position. The second closing sensor 43 outputs the "second closed signal Sc2" that is activated when the second shutter 32 is located in the closed position and deactivated when the second shutter 32 is not located in the closed position. The second opening sensor 44 outputs the "second open signal So2" that is activated when the second shutter 32 is located in the open position and deactivated when the second shutter 32 is not located in the open position.

As described above, when the first shutter 31 is located in the closed position, the first closed signal Sc1 is activated, and the first open signal So1 is deactivated. When the first shutter 31 is located in the open position, the first closed signal Sc1 is deactivated, and the first open signal So1 is activated. When the first shutter 31 is located in an intermediate position between the closed position and the open position, in other words, when the first shutter 31 is not located in the closed position nor the open position, the first closed signal Sc1 and the first open signal So1 are both deactivated. The relationship of the second closed signal Sc2 and the second open signal So2 with the position of the second shutter 32 is the same. In another embodiment, the first closed signal Sc1 may be deactivated when the first shutter 31 is located in the closed position and activated when the first shutter 31 is not located in the closed position. The same applies to the remaining signals.

The casing 51 is box-shaped. The casing 51 accommodates components of the laser processing head 12. The casing 51 includes a connector connected to the optical fiber cable 13. The casing 51 further includes a window through which light is transmitted in a portion to which the laser light Lx1, Ly is emitted.

The controller 14 will now be described.

The controller 14 controls the processing laser light source 11 and the components of the laser processing head 12 in accordance with a predetermined processing condition input by a user. More specifically, the controller 14 allows the processing laser light source 11 and the viewing laser light source 21 to emit the laser light Lx, Ly and adjusts the intensity of the laser light Lx, Ly. In addition, the controller 14 drives the lens driver 234 of the focal length adjuster 23 to adjust the focal length of the laser light Lx1, Ly and drives the scanner driver 243 of the scanner 24 to change the position of the workpiece W irradiated with the laser light Lx1, Ly. Further, the controller 14 drives the first driver 33 to open and close the first shutter 31 and drives the second driver 34 to open and close the second shutter 32.

The controller 14 controls the processing laser light source 11 and the components of the laser processing head 12 to implement a processing mode, a viewing mode, a measuring mode, and a standby mode. In the processing mode, the workpiece W is irradiated with processing laser light Lx so that the workpiece W is processed. In the viewing mode, the workpiece W is irradiated with the viewing laser light Ly so that the portion of the workpiece W that will be processed is visualized. In the measuring mode, the intensity of the processing laser light Lx is measured. The standby mode waits for implementation of the processing mode, the viewing mode, or the measuring mode.

When the controller 14 implements the processing mode in accordance with the processing condition, the controller 14 disposes the first shutter 31 and the second shutter 32 in the open position. The controller 14 allows the processing laser light source 11 to emit the laser light Lx. Of the laser light Lx emitted from the processing laser light source 11, the laser light Lx1 transmits through the optical component 22 and the focal length adjuster 23 and then enters the scanner 24. The controller 14 scans the laser light Lx1 with the scanner 24 while adjusting the focal point of the laser light Lx1 with the focal length adjuster 23 in accordance with the processing condition. Thus, the laser processing device 10 processes the workpiece W in accordance with the processing condition.

When the controller 14 implements the viewing mode in accordance with the processing condition, the controller 14 disposes the first shutter 31 in the closed position and the second shutter 32 in the open position. The controller 14 allows the viewing laser light source 21 to emit the laser light Ly. The laser light Ly emitted from the viewing laser light source 21 is reflected by the optical component 22. Subsequently, the laser light Ly transmits through the focal length adjuster 23 and then enters the scanner 24. The controller 14 scans the laser light Ly with the scanner 24 while adjusting the focal point of the laser light Ly with the focal length adjuster 23 in accordance with the processing condition. This allows an operator to visually recognize the characters, symbols, figures, or the like formed on the surface of the workpiece W. In the viewing mode, the first shutter 31 is disposed in the closed position. In this regard, even when the laser light Lx is erroneously emitted from the processing laser light source 11, the workpiece W will not be irradiated with the laser light Lx1.

When the controller 14 implements the measuring mode, the controller 14 disposes the first shutter 31 in the open position and the second shutter 32 in the closed position. The controller 14 allows the processing laser light source 11 to emit the laser light Lx. Of the laser light Lx emitted from the processing laser light source 11, the laser light Lx2 is reflected by the optical component 22 and received by the light receiving portion 25. The controller 14 obtains the intensity of the laser light Lx based on a signal corresponding to the intensity of the laser light Lx2 output from the light receiving portion 25. The controller 14 controls oscillation of the processing laser light source 11 so that the workpiece W is irradiated with the laser light Lx1 having a constant intensity or so that the workpiece W is irradiated with the laser light Lx1, the intensity of which is set to a target value. The measuring mode is implemented, for example, after the laser processing device 10 is powered on or before the processing mode is implemented in accordance with the processing condition. In the measuring mode, the first shutter 31 is disposed in the closed position. Thus, the workpiece W will not be irradiated with the laser light Lx1.

When the controller 14 implements the standby mode, the controller 14 disposes the first shutter 31 and the second shutter 32 in the closed position. In this state, the laser light Lx, Ly will not be emitted from the processing laser light source 11 and the viewing laser light source 21.

Control that is executed by the controller 14 during implementation of the processing mode, the viewing mode, and the measuring mode will now be described.

During implementation of the processing mode, the first shutter 31 and the second shutter 32 are maintained in the open position. In other words, during implementation of the processing mode, the first shutter 31 and the second shutter 32 will not move from the open position. Hence, the controller 14 determines the state of the shutter during implementation of the processing mode as follows. When detection results of the first opening sensor 42 and the second opening sensor 44 indicate that the first shutter 31 and the second shutter 32 are in the open position, the controller 14 determines that the shutter is in a normal state. When detection results of the first closing sensor 41 and the second closing sensor 43 indicate that the first shutter 31 and the second shutter 32 are not in the closed position, the controller 14 determines that the shutter is in a normal state.

More specifically, when the first open signal So1 and the second open signal So2 are activated and the first closed signal Sc1 and the second closed signal Sc2 are deactivated, the controller 14 determines that the shutter is in a normal state. In other words, when at least one of the first open signal So1 and the second open signal So2 is deactivated or at least one of the first closed signal Sc1 and the second closed signal Sc2 is activated, the controller 14 determines that the shutter is not in a normal state.

When the controller 14 determines that the shutter is in a normal state, the controller 14 continues to implement the processing mode. When the controller 14 determines that the shutter is not in a normal state, the controller 14 causes the notification portion 26 to issue a notification of a first warning and stops emission of the laser light Lx from the processing laser light source 11.

When the first shutter 31 and the second shutter 32 are not located in a position corresponding to the mode, the first warning is output and thus has a high degree of urgency. Preferably, when outputting the first warning, the controller 14 indicates a recommendation to perform maintenance and limits implementation of the processing mode, the viewing mode, and the measuring mode.

During implementation of the viewing mode, the first shutter 31 is maintained in the closed position and the second shutter 32 is maintained in the open position. In other words, during implementation of the viewing mode, the first shutter 31 will not move from the closed position, and the second shutter 32 will not move from the open position. Hence, the controller 14 determines the state of the shutter during implementation of the viewing mode as follows. When detection results of the first closing sensor 41 and the second opening sensor 44 indicate that the first shutter 31 is located in the closed position and the second shutter 32 is located in the open position, the controller 14 determines that the shutter is in a normal state. Also, when detection results of the first opening sensor 42 and the second closing sensor 43 indicate that the first shutter 31 is not located in the open position and the second shutter 32 is not located in the closed position, the controller 14 determines that the shutter is in a normal state.

More specifically, when the first closed signal Sc1 and the second open signal So2 are activated and the first open signal So1 and the second closed signal Sc2 are deactivated, the controller 14 determines that the shutter is in a normal state. In other words, when at least one of the first closed signal Sc1 and the second open signal So2 is deactivated or at least one of the first open signal So1 and the second closed signal Sc2 is activated, the controller 14 determines that the shutter is not in a normal state.

When the controller 14 determines that the shutter is in a normal state, the controller 14 continues to implement the viewing mode. When the controller 14 determines that the shutter is not in a normal state, the controller 14 causes the notification portion 26 to issue a notification of the first warning and stops emission of the laser light Ly from the viewing laser light source 21.

During implementation of the measuring mode, the first shutter 31 is maintained in the open position, the second shutter 32 is maintained in the closed position. In other words, during implementation of the measuring mode, the first shutter 31 will not move from the open position, and the second shutter 32 will not move from the closed position. Hence, the controller 14 determines the state of the shutter during implementation of the measuring mode as follows. When detection results of the first opening sensor 42 and the second closing sensor 43 indicate that the first shutter 31 is located in the open state and the second shutter 32 is located in the closed position, the controller 14 determines that the shutter is in a normal state. Also, when detection results of the first closing sensor 41 and the second opening sensor 44 indicate that the first shutter 31 is not located in the closed position and the second shutter 32 is not located in the open position, the controller 14 determines that the shutter is in a normal state.

More specifically, when the first open So1 and the second closed signal Sc2 are activated and the first closed signal Sc1 and the second open signal So2 are deactivated, the controller 14 determines that the shutter is in a normal state. In other words, when at least one of the first open signal So1 and the second closed signal Sc2 is deactivated or at least one of the first closed signal Sc1 and the second open signal So2 is activated, the controller 14 determines that the shutter is not in a normal state.

When the controller 14 determines that the shutter is in a normal state, the controller 14 continues to implement the measuring mode. When the controller 14 determines that the shutter is not in a normal state, the controller 14 causes the notification portion 26 to issue a notification of the first warning and stops emission of the laser light Lx from the processing laser light source 11.

Control that is executed by the controller 14 to switch between the processing mode, the viewing mode, the measuring mode, and the standby mode will now be described.

When the laser processing device 10 switches from one mode to another mode, each of the first shutter 31 and the second shutter 32 is actuated to open from the closed position toward the open position or to close from the open position toward the closed position. When deterioration occurs in the first shutter 31, the second shutter 32, the first driver 33, and the second driver 34, time taken to open and close the first shutter 31 and the second shutter 32 changes. Specifically, the time taken to open and close the first shutter 31 and the second shutter 32 increases.

The controller 14 obtains the time taken to close the first shutter 31 from the open position to the closed position, in other words, the time from when the first open signal So1 is deactivated until the first closed signal Sc1 is activated, as the "first closing time Tc1". The controller 14 also obtains the time taken to open the first shutter 31 from the closed position to the open position, in other words, the time from when the first closed signal Sc1 is deactivated until the first open signal So1 is activated, as the "first opening time To1". The first closing time Tc1 and the first opening time To1 correspond to an example of the "first actuation time".

In the same manner, the controller 14 obtains the time taken to close the second shutter 32 from the open position to the closed position, in other words, the time from when the second open signal So2 is deactivated until the second closed signal Sc2 is activated, as the "second closing time Tc2". The controller 14 also obtains the time taken to open the second shutter 32 from the closed position to the open position, in other words, the time from when the second closed signal Sc2 is deactivated until the second open signal So2 is activated, as the "second opening time To2". The second closing time Tc2 and the second opening time To2 correspond to an example of the "second actuation time".

The controller 14 determines whether the state of the first shutter 31 is normal based on at least one of the first closing time Tc1 and the first opening time To1. The controller 14 also determines whether the state of the second shutter 32 is normal based on at least one of the second closing time Tc2 and the second opening time To2. When at least one of the first closing time Tc1, the first opening time To1, the second closing time Tc2, and the second opening time To2 is greater than or equal to a time determination value Tth that is set in advance, the controller 14 causes the notification portion 26 to output a second warning.

In addition, the controller 14 determines whether the state of the first shutter 31 is normal based on a difference ΔTc between the first closing time Tc1 and the second closing time Tc2. In the same manner, the controller 14 determines whether the state of the second shutter 32 is normal based on a difference ΔTo between the first opening time To1 and the second opening time To2. When the difference ΔTc or the difference ΔTo is greater than or equal to a difference determination value ΔTth that is set in advance, the controller 14 causes the notification portion 26 to output the second warning.

The second warning is output when the actuation time of the first shutter 31 and the second shutter 32 is increased, and thus has a lower degree of urgency than the first warning. When outputting the second warning, it is preferred that the controller 14 indicates a recommendation to perform maintenance. However, the controller 14 does not limit implementation of the processing mode, the viewing mode, and the measuring mode.

Preferably, the time determination value Tth is determined based on an actuation time of the shutter at the time of shipping the laser processing device 10. The time determination value Tth may differ between an actuation to close the shutter and actuation to open the shutter. The difference determination value ΔTth may differ in the same manner.

In the present embodiment, the controller 14 incorporates storage and stores the first closing time Tc1, the first opening time To1, the second closing time Tc2, and the second opening time To2 in the storage. In an example, the first shutter 31 is actuated to close from the open position to the closed position in accordance with a change in the mode. In this case, the controller 14 obtains the first closing time Tc1 when the first shutter 31 is actuated to close. Then, the controller 14 compares the first closing time Tc1 that is stored in the storage with the first closing time Tc1 that is newly obtained. When the newly obtained first closing time Tc1 is greater than the first closing time Tc1 stored in the storage, the controller 14 stores the newly obtained first closing time Tc1 in the storage. Thus, the controller 14 stores the longest first closing time Tc1 in the storage. The same applies to the first opening time To1, the second closing time Tc2, and the second opening time To2.

With the description above, when a notification of the first warning or the second warning is issued, it is considered that at least one of the first shutter 31 and the second shutter 32 is not normal. Therefore, when issuing a notification of the first warning and the second warning, it is preferred that the controller 14 issues the notification so that the non-normal shutter is identified.

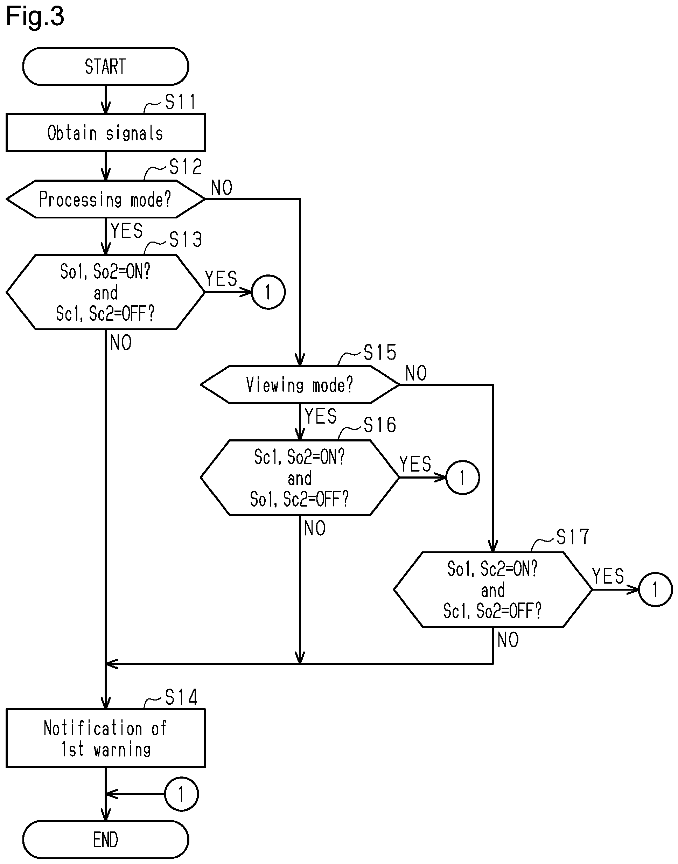

The flow of a process executed by the controller 14 when the standby mode is not being implemented will now be described with reference to the flowchart shown in Fig. 3. The controller 14 repeatedly executes the process in a predetermined control cycle.

As shown in Fig. 3, the controller 14 obtains signals output from the first closing sensor 41, the first opening sensor 42, the second closing sensor 43, and the second opening sensor 44 (S11). The controller 14 determines whether the processing mode is being implemented (S12). When the processing mode is being implemented (S12: YES), the controller 14 determines whether the first open signal So1 and the second open signal So2 are activated and the first closed signal Sc1 and the second closed signal Sc2 are deactivated (S13). When an affirmative determination is made in step S13 (S13: YES), the controller 14 temporarily ends the process. In this case, the controller 14 continues to implement the processing mode. When a negative determination is made in step S13 (S13: NO), the controller 14 causes the notification portion 26 to issue a notification of the first warning (S14). In this case, the controller 14 interrupts the implementation of the processing mode. Subsequently, the controller 14 ends the process.

In step S12, when the processing mode is not being implemented (S12: NO), the controller 14 determines whether the viewing mode is being implemented (S15). When the viewing mode is being implemented (S15: YES), the controller 14 determines whether the first closed signal Sc1 and the second open signal So2 are activated and the first open signal So1 and the second closed signal Sc2 are deactivated (S16). When an affirmative determination is made in step S16 (S16: YES), the controller 14 temporarily ends the process. In this case, the controller 14 continues to implement the viewing mode. When a negative determination is made in step S16 (S16: NO), the controller 14 executes step S14. In this case, the controller 14 interrupts the implementation of the viewing mode.

In step S15, when the viewing mode is not being implemented (S15: NO), the controller 14 determines whether the first open signal So1 and the second closed signal Sc2 are activated and the first closed signal Sc1 and the second open signal So2 are deactivated (S17). A negative determination made in step S15 refers to the measuring mode being implemented. When an affirmative determination is made in step S17 (S17: YES), the controller 14 temporality ends the process. In this case, the controller 14 continues to implement the measuring mode. When a negative determination is made in step S17 (S17: NO), the controller 14 executes step S14. In this case, the controller 14 interrupts the implementation of the measuring mode.

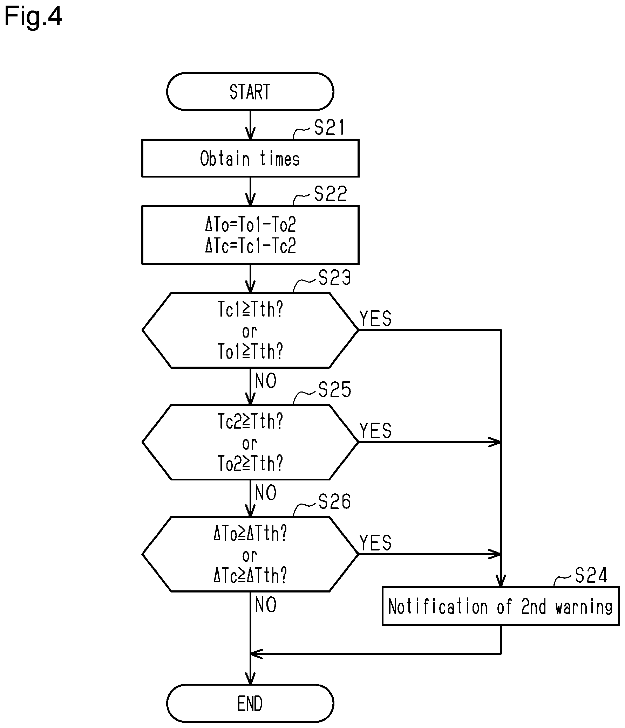

The flow of a process executed by the controller 14 for determining the state of the shutter will now be described with reference to the flowchart shown in Fig. 4. The controller 14 executes the process, for example, when the first shutter 31 and the second shutter 32 have been actuated to open and close more than a predetermined number of times since the previous execution of the process.

As shown in Fig. 4, the controller 14 obtains the most recent first closing time Tc1, the most recent first opening time To1, the most recent second closing time Tc2, and the most recent second opening time To2 (S21). Subsequently, the controller 14 calculates the difference ΔTo between the first opening time To1 and the second opening time To2 and the difference ΔTc between the first closing time Tc1 and the second closing time Tc2 (S22). The differences ΔTc and ΔTo are each calculated as an absolute value.

The controller 14 determines whether at least one of the first closing time Tc1 and the first opening time To1 is greater than or equal to the time determination value Tth (S23). When at least one of the first closing time Tc1 and the first opening time To1 is greater than or equal to the time determination value Tth (S23: YES), in other words, when the time taken to open and close the first shutter 31 is increased, the controller 14 issues a notification of the second warning (S24). Subsequently, the controller 14 ends the process.

When the first closing time Tc1 and the first opening time To1 are both less than the time determination value Tth (S23: NO), the controller 14 determines whether at least one of the second closing time Tc2 and the second opening time To2 is greater than or equal to the time determination value Tth (S25). When at least one of the second closing time Tc2 and the second opening time To2 is greater than or equal to the time determination value Tth (S25: YES), in other words, when the time taken to open and close the second shutter 32 is increased, the controller 14 executes step S24.

When the second closing time Tc2 and the second opening time To2 are both less than the time determination value Tth (S25: NO), the controller 14 determines whether at least one of the differences ΔTc and ΔTo is greater than or equal to the difference determination value ΔTth (S26). When at least one of the differences ΔTc and ΔTo is greater than or equal to the difference determination value ΔTth (S26: YES), in other words, when the time taken to open and close the first shutter 31 and the second shutter 32 is deviated, the controller 14 executes step S24. When the differences ΔTc and ΔTo are less than the difference determination value ΔTth (S26: NO), the controller 14 ends the process.

The operation of the present embodiment will now be described.

As shown in Fig. 1, during the implementation of the processing mode, the first shutter 31 is disposed in the open position indicated by the solid lines, and the second shutter 32 is disposed in the open position indicated by the solid lines. During the implementation of the viewing mode, the first shutter 31 is disposed in the closed position indicated by the double-dashed lines, and the second shutter 32 is disposed in the open position indicated by the solid lines. During the implementation of the measuring mode, the first shutter 31 is disposed in the open position indicated by the solid lines, and the second shutter 32 is disposed in the closed position indicated by the double-dashed lines.

During the implementation of the processing mode, the viewing mode, and the measuring mode, the laser processing device 10 monitors the positions of the first shutter 31 and the second shutter 32 based on detection results of the first closing sensor 41, the first opening sensor 42, the second closing sensor 43, and the second opening sensor 44. When the positions of the first shutter 31 and the second shutter 32 do not correspond to the mode that is being implemented, the laser processing device 10 outputs the first warning and stops emission of the laser light Lx, Ly from the laser light source corresponding to the implemented mode.

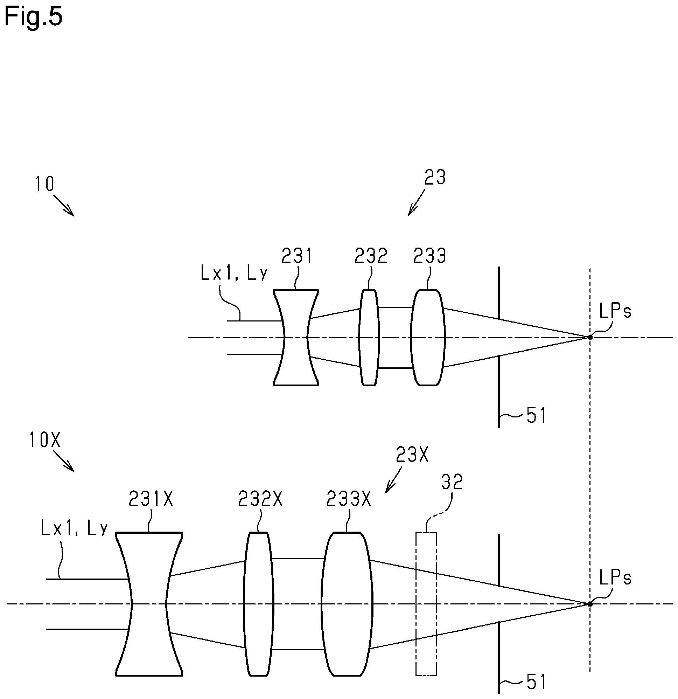

The advantages of the present embodiment will now be described.
(1) The laser processing device 10 determines the positions of the first shutter 31 and the second shutter 32 using four sensors, namely, the first closing sensor 41, the first opening sensor 42, the second closing sensor 43, and the second opening sensor 44. This allows the laser processing device 10 to correctly determine the position of the shutter. Thus, the laser processing device 10 accurately determines whether the shutter is normally actuated in the processing mode, the viewing mode, and the measuring mode.
(2) More specifically, the laser processing device 10 determines whether the state of the shutter is normal based on signals output from the four sensors in each of the processing mode, the viewing mode, and the measuring mode. Thus, the laser processing device 10 further accurately determines whether the shutter is normally actuated in the processing mode, the viewing mode, and the measuring mode.
(3) In the processing mode, the viewing mode, and the measuring mode, when the shutter is not located in an expected position, the laser processing device 10 issues a notification of the first warning having a high degree of urgency. In addition to the notification of the first warning, the laser processing device 10 stops emission of the laser light Lx, Ly from the processing laser light source 11 or the viewing laser light source 21. This increases the safety of the laser processing device 10.
(4) The laser processing device 10 determines whether the state of the shutter is normal based on the first closing time Tc1 and the second closing time Tc2. More specifically, the laser processing device 10 determines whether the state of the shutter is normal based on comparison of the first closing time Tc1 and the second closing time Tc2 with the time determination value Tth. When the laser processing device 10 determines that the state of the shutter is not normal, a notification of the second warning having a low degree of urgency is issued.
(5) The laser processing device 10 determines whether the state of the shutter is normal based on the first opening time To1 and the second opening time To2. More specifically, the laser processing device 10 determines whether the state of the shutter is normal based on comparison of the first opening time To1 and the second opening time To2 with the time determination value Tth. When the laser processing device 10 determines that the state of the shutter is not normal, a notification of the second warning having a low degree of urgency is issued.
(6) The laser processing device 10 determines whether the state of the shutter is normal based on the difference ΔTc between the first closing time Tc1 and the second closing time Tc2 and the difference ΔTo between the first opening time To1 and the second opening time To2. More specifically, the laser processing device 10 determines whether the state of the shutter is normal based on comparison of the differences ΔTc and ΔTo with the difference determination value ΔTth. When the laser processing device 10 determines that the state of the shutter is not normal, a notification of the second warning having a low degree of urgency is issued.
(7) The laser processing device 10X of the comparative example will now be considered. As shown in Fig. 5, the second shutter 32 is disposed forward from the focal length adjuster 23X in the traveling direction of the laser light Lx1. In the laser processing device 10X of the comparative example, the focal length adjuster 23X needs to adjust the focal length of the laser light Lx1 taking into consideration the region occupied by the second shutter 32 in the direction in which the optical axis of the laser light Lx1 extends. With this structure, the focal length adjuster 23X is likely to increase in size in the traveling direction of the laser light Lx1 and a direction orthogonal to the traveling direction. In this regard, in the laser processing device 10 of the present embodiment, the second shutter 32 is disposed between the optical component 22 and the focal length adjuster 23. Thus, the above situation is not likely to occur. This limits enlargement of the laser processing device 10.
(8) As shown in Fig. 5, in the laser processing device 10X of the comparative example, if the second shutter 32 is located without changing the focal point of the laser light Lx1, Ly and the spot size in the focal point from the present embodiment, the following problems arise. More specifically, as shown in Fig. 5, the first lens 231X, the second lens 232X, and the third lens 233X will be spaced apart by a greater gap, and the first lens 231X, the second lens 232X, and the third lens 233X will be enlarged. In this regard, in the laser processing device 10 of the present embodiment, the second shutter 32 is disposed between the optical component 22 and the focal length adjuster 23. This further limits enlargement of the device. The laser processing device 10 of the present embodiment limits increases in the cost due to enlargement of the lenses.
(9) If the focal length adjuster 23 is located forward from the scanner 24 in the traveling direction of the laser light Lx1, the first lens 231 of the focal length adjuster 23 needs to be sized to receive the laser light Lx1 that is scanned at the scanner 24. In this regard, in the laser processing device 10, the focal length adjuster 23 is disposed between the second shutter 32 and the scanner 24. This limits enlargement of the first lens 231, more specifically, enlargement of the focal length adjuster 23.
(10) In the laser processing device 10X of the comparative example, the second shutter 32 blocks the laser light Lx1, the beam radius of which has converged through the focal length adjuster 23, that is, laser light having a high energy density. Therefore, the second shutter 32 needs to be formed of a material having high thermal durability. In the laser processing device 10 of the present embodiment, the second shutter 32 blocks the laser light Lx1 prior to convergence of the beam radius through the focal length adjuster 23, that is, laser light having a low energy density. Hence, in the laser processing device 10, the second shutter 32 does not need to be formed of a highly durable material.

The present embodiment may be modified as follows. The present embodiment and the following modified examples can be combined as long as the combined modified examples remain technically consistent with each other.

The laser processing head 12 may be formed integrally with at least one of the processing laser light source 11 and the controller 14. When integrally formed, for example, the casing 51 may accommodate the processing laser light source 11, or the casing 51 may accommodate the processing laser light source 11 and the controller 14. When the casing 51 accommodates the processing laser light source 11, the optical fiber cable 13 may be omitted from the laser processing device 10 depending on the type of the laser light source. The laser processing device 10 may include a collimated optical system that collimates beams of the laser light Lx emitted from the processing laser light source 11.

The laser processing head 12 may be configured to transmit the laser light Lx1, which is transmitted through the optical component 22, toward the light receiving portion 25 and transmit the laser light Lx2, which is reflected by the optical component 22, toward the workpiece W.

The third lens 233 may be omitted from the focal length adjuster 23. In this case, a collecting lens corresponding to the third lens 233 may be disposed in a portion of the casing 51 through which the laser light Lx1, Ly transmits. When the collecting lens is arranged, the direction of the laser light Lx1, Ly is changed by the scanner 24, and the laser light Lx1, Ly is collected toward the workpiece W. With a structure that does not include the third lens, laser light emitted from the focal length adjuster 23 is collected toward the scanner 24 and the workpiece W. The focal length adjuster 23 may include four or more lenses.

In the focal length adjuster 23, the lens driver 234 may move the second lens 232 relative to the first lens 231 to adjust the distance between the first lens 231 and the second lens 232.

The first shutter 31 and the second shutter 32 may have different specifications. In this case, the first closing time Tc1 and the first opening time To1 of the first shutter 31 differ from the second closing time Tc2 and the second opening time To2 of the second shutter 32. Therefore, it is preferred that the times are multiplied by a predetermined coefficient and then compared with each other.

The first closing sensor 41, the first opening sensor 42, the second closing sensor 43, and the second opening sensor 44 may include an analog sensor.

The controller 14 may execute at least one of the determination processes in steps S23, S25, and S26 shown in Fig. 4. In step S23, the controller 14 may execute a determination process using only one of the first closing time Tc1 and the first opening time To1. In step S25, the controller 14 may execute a determination process using only one of the second closing time Tc2 and the second opening time To2. In step S26, the controller 14 may execute a determination process using only one of the differences ΔTc and ΔTo.

The controller 14 may determine whether to output the second warning based on a difference between the first closing time Tc1 and the first opening time To1. In the same manner, the controller 14 may determine whether to output the second warning based on a difference between the second closing time Tc2 and the second opening time To2.

When the first shutter 31 is actuated to close from the open position to the closed position, the controller 14 may obtain a first closing time Tc1 and determine whether to output the second warning based on comparison of the obtained first closing time Tc1 with the time determination value Tth. In this configuration, the controller 14 does not need to store the first closing time Tc1. The same applies to the first opening time To1, the second closing time Tc2, and the second opening time To2.

The controller 14 may store the number of times the first shutter 31 and the second shutter 32 open and close. The controller 14 may cause the notification portion 26 to output the second warning in accordance with the number of times the first shutter 31 and the second shutter 32 open and close.

The controller 14 may be circuitry that includes one or more processors that operate according to a computer program, one or more dedicated hardware circuits that execute at least part of various processes, or a combination thereof. The processor includes a CPU and memory such as RAM and ROM. The memory stores program codes or instructions configured to cause the CPU to execute processes. The memory, or storage medium, includes any type of medium that is accessible by general-purpose computers and dedicated computers.

### REFERENCE SIGNS LIST

10) laser processing device; 11) processing laser light source; 12) laser processing head; 14) controller; 21) viewing laser light source; 22) optical component; 23) focal length adjuster; 24) scanner; 25) light receiving portion; 26) notification portion; 31) first shutter; 32) second shutter; 41) first closing sensor (example of first opening-closing sensor); 42) first opening sensor (example of first opening-closing sensor); 43) second closing sensor (example of second opening-closing sensor); 44) second opening sensor (example of second opening-closing sensor); W) workpiece; Lx) laser light (example of processing laser light); Lx1) laser light (example of first split light); Lx2) laser light (example of first split light); Ly) laser light (example of viewing laser light); Sc1) first closing signal; So1) first opening signal; Sc2) second closing signal; So2) second opening signal; Tc1) first closing time (example of first actuation time); Tc2) second closing time (example of second actuation time); To1) first opening time (example of first actuation time); To2) second opening time (example of second actuation time); Tth) time determination value; ΔTc, ΔTo) difference; ΔTth) difference determination value

## Claims

1. A laser processing head configured to process a workpiece using processing laser light that is invisible, the laser processing head, comprising:
an optical component that splits the processing laser light, which is emitted from a processing laser light source, into first split light and second split light and aligns an optical axis of viewing laser light with an optical axis of the first split light, the viewing laser light being visible and being emitted from a viewing laser light source;
a scanner that scans the first split light and the viewing laser light to the workpiece;
a light receiving portion that detects an intensity of the second split light;
a first shutter disposed closer to the processing laser light source than the optical component to shift between a closed position at which the first shutter blocks the processing laser light and an open position at which the first shutter allows transmission of the processing laser light;
a second shutter disposed closer to the workpiece than the optical component to shift between a closed position at which the second shutter blocks the first split light and the viewing laser light and an open position at which the second shutter allows transmission of the first split light and the viewing laser light; and
a focal length adjuster that adjusts a focal length of the first split light and a focal length of the viewing laser light,
wherein the second shutter is disposed between the optical component and the focal length adjuster.

2. The laser processing head according to claim 1, wherein
the focal length adjuster includes a first lens and a second lens disposed on an optical axis of the first lens, and
the focal length adjuster adjusts a distance between the first lens and the second lens to adjust a focal length of the first split light that transmits through the first lens and the second lens.

3. The laser processing head according to claim 2, wherein the focal length adjuster is disposed between the optical component and the scanner.

4. The laser processing head according to any one of claims 1 to 3, further comprising:
a first opening-closing sensor that detects an open-closed state of the first shutter; and
a second opening-closing sensor that detects an open-closed state of the second shutter.

5. The laser processing head according to claim 4, wherein
the first opening-closing sensor includes a first closing sensor that detects that the first shutter is located in the closed position and a first opening sensor that detects that the first shutter is located in the open position, and
the second opening-closing sensor includes a second closing sensor that detects that the second shutter is located in the closed position and a second opening sensor that detects that the second shutter is located in the open position.

6. A laser processing device configured to process a workpiece using processing laser light that is invisible, the laser processing device, comprising:
a processing laser light source that emits the processing laser light;
a viewing laser light source that emits viewing laser light that is visible;
an optical component that splits the processing laser light into first split light and second split light and aligns an optical axis of the viewing laser light with an optical axis of the first split light;
a scanner that scans the first split light and the viewing laser light to the workpiece;
a light receiving portion that detects an intensity of the second split light;
a first shutter disposed closer to the processing laser light source than the optical component to shift between a closed position at which the first shutter blocks the processing laser light and an open position at which the first shutter allows transmission of the processing laser light;
a second shutter disposed closer to the workpiece than the optical component to shift between a closed position at which the second shutter blocks the first split light and the viewing laser light and an open position at which the second shutter allows transmission of the first split light and the viewing laser light; and
a focal length adjuster that adjusts a focal length of the first split light and a focal length of the viewing laser light,
wherein the second shutter is disposed between the optical component and the focal length adjuster.

7. The laser processing device according to claim 6, wherein
the focal length adjuster includes a first lens and a second lens disposed on an optical axis of the first lens, and
the focal length adjuster adjusts a distance between the first lens and the second lens to adjust a focal length of the first split light that transmits through the first lens and the second lens.

8. The laser processing device according to claim 7, wherein the focal length adjuster is disposed between the optical component and the scanner.

9. The laser processing device according to any one of claims 6 to 8, further comprising:
a first opening-closing sensor that detects an open-closed state of the first shutter; and
a second opening-closing sensor that detects an open-closed state of the second shutter.

10. The laser processing device according to claim 9, wherein
the first opening-closing sensor includes a first closing sensor that detects that the first shutter is located in the closed position and a first opening sensor that detects that the first shutter is located in the open position, and
the second opening-closing sensor includes a second closing sensor that detects that the second shutter is located in the closed position and a second opening sensor that detects that the second shutter is located in the open position.
